# EUROPEAN PATENT APPLICATION

(11) **EP 1 393 668 A1**
(43) Date of publication of application: **03.03.2004**
(21) Application number: 02703906.4
(22) Date of filing: 26.02.2002
(51) Int. Cl.: A47L 25/00

(54) **ROLL TYPE ADHESIVE CLEANER AND METHOD FOR PRODUCING THE SAME**

(30) Priority: 06.03.2001 JP 2001062009; 20.08.2001 JP 2001249103; 12.12.2001 JP 2001379284
(71) Applicant: Kao Corporation, Chuo-Ku Tokyo 103 (JP)
(72) Inventor: HIROTA, Takayuki, Kawagoe-shi, Saitama 350-0811 (JP); SHIZUNO, Akihito, Kao Corporation, Research Lab., Haga-gun, Tochigi 321-3497 (JP); TAKABAYASHI, Keima, Kao Corporation, Research Lab., Haga-gun, Tochigi 321-3497 (JP); OTSUKA, Hiroshi, Kao Corporation, Research Lab., Haga-gun, Tochigi 321-3497 (JP); UEMATSU, Takehiko, Kao Corporation, Research Lab, Haga-gun, Tochigi 321-3497 (JP); WADA, Minoru, Kao Corporation, Research Lab., Haga-gun, Tochigi 321-3497 (JP)
(74) Representative: VOSSIUS & PARTNER
(86) International application number: PCT/JP2002/001751
(87) International publication number: WO 2002/069780

(57) **Abstract**

An object of the invention is to provide a roll type adhesive cleaner which has an easy-to-find starting end for peeling and resists double peeling and which can be produced with smaller-sized equipment that is not required to have accuracy and is therefore economically advantageous and to provide a method of fabricating the roll type adhesive cleaner. The roll type adhesive cleaner of the invention has a plurality of single-sided adhesive tapes (T) each having an adhesive-coated surface (A) on one side and a releasable surface (H) on the other side which are adhered around a core tube (11) in a layered configuration with the adhesive-coated surface (A) out and with lateral sides (s) thereof oblique to the axis of the core tube (11). The single-sided adhesive tape (T) forming each layer is laid with laps on the lateral sides (s) thereof.

## Description

### Technical Field:

The present invention relates to a roll type adhesive cleaner and a method of making the same, the cleaner being of the type that catches dust, etc. on the adhesive-coated surface of layers of adhesive tapes, which are peeled off one by one on being soiled with dust.

### Background Art:

A roll type adhesive cleaner is in frequent use as a means for removing dust and debris clinging to clothing, carpets, etc. An adhesive cleaner of this type has a plurality of single-sided adhesive tapes laid on a core. Each time a quantity of dust adheres to the adhesive-coated surface, the tapes are peeled off one by one to expose a fresh adhesive-coated surface.

Most of conventional adhesive cleaners are of the simple winding type in which a single-sided adhesive tape or a single-sided adhesive sheet of a working width is wound around a core in layers. There are helical winding type ones in which a single-sided adhesive tape is wound obliquely to the core axis to make it easier for a user to peel the single-sided adhesive tape covered with dust.

JP-A-11-216096 discloses the following method of producing a helical winding type adhesive cleaner. Core-forming tapes are wound around a mandrel to form a core tube. With the core tube being moved in the axial direction, a first single-sided adhesive tape is helically wound around the core tube with its adhesive-coated surface outside while an adhesive is applied to the releasable side of the adhesive tape so that the adhesive tape is adhered around the core tube.

Then a large number of single-sided adhesive tapes are helically wound on the first single-sided adhesive tape to form a laminate tube. The large number of single-sided adhesive tapes fed from the respective feed members (bobbins) arranged by the side of the mandrel or the core tube, and each tape is wrapped in such a manner that the adjacent edges are butted to each other, i.e., in an edge-to-edge configuration to form a layer. The thus formed laminate tube is cut to prescribed lengths across the axial direction. The laminate tube of prescribed length is fitted over a roller rotatably attached to a handle and is rolled on the surface of clothing, carpets, etc. to catch dust or debris on the adhesive tape.

However, such a helical winding type adhesive cleaner and the process of making it have disadvantages from the aspect of production equipment and the aspect of peeling capability as follows.

Where a laminate tube is made of edge-to-edge configuration adhesive tapes, a large number of feed members (bobbins) for reeling off adhesive tape are needed, and these feed members should be spaced at a prescribed interval. Further, the adhesive tapes should be fed and butt-wrapped with high accuracy. As a result, the feed members are ought to be arranged over a long distance along the axial direction, which necessitates large-scaled equipment and a large space for production and requires highly accurate equipment. This is extremely disadvantageous for economy.

By cutting the laminate tube at prescribed intervals across the axial direction, there is an advantage that the end of a single-sided adhesive tape to be peeled is to have an acute-angled sharp tip, which facilitates peeling of each single-sided adhesive tape. In addition, there is no need to form perforations for tearing apart. Nevertheless, it is not easy to find the end of each layer of the single-sided adhesive tape where peeling can start because the single-sided adhesive tape is wound in an edge-to-edge configuration to provide a laminate with an even surface as a whole. Cases are sometimes met with where peeling the upper adhesive tape is accompanied with peeling of the underlying adhesive tape (double peeling).

The present invention has been made in order to settle the above-mentioned problems of the related art. It is therefore an object of the present invention to provide a roll type adhesive cleaner which has an easy-to-find starting end for peeling and resists double peeling and which can be produced with smaller-sized equipment that is not required to have accuracy and is therefore economically advantageous and to provide a method of fabricating the roll type adhesive cleaner.

### Disclosure of the Invention:

The object of the present invention is accomplished by the following means.
(1) A roll type adhesive cleaner comprising a plurality of single-sided adhesive tapes each having an adhesive-coated surface on one side thereof and a releasable surface on the other side thereof which are adhered around a core tube in a layered configuration with the adhesive-coated surface out and with lateral sides thereof oblique to the axis of the core tube, wherein:
   the single-sided adhesive tape forming each layer is laid with laps on the lateral sides thereof.
(2) A roll type adhesive cleaner set forth in (1) above, wherein the single-sided adhesive tapes each have a non-coated area having no adhesive applied on the lateral side thereof.
(3) A method of producing a roll type adhesive cleaner comprising:
   the step of forming a core tube, in which core-forming tapes are wound around a mandrel to form a core tube,
   the step of forming a laminate tube, in which a large number of single-sided adhesive tapes each having an adhesive-coated surface on the outer side thereof and a releasable surface (H) on the inner side thereof are wound around the core tube in a layered configuration such that the lateral sides of the single-sided adhesive tapes are oblique to the axis of the core tube to form a laminate tube, and
   the step of cutting the laminate, in which the laminate tube is cut at prescribed intervals across the axis direction, wherein:
      the single-sided adhesive tape forming each layer is laid with laps on the lateral sides thereof.
(4) A roll type adhesive cleaner comprising a plurality of single-sided adhesive tapes adhered around a core tube in a layered configuration such that the lateral sides of the single-sided adhesive tapes are oblique to the axis of the core tube, wherein:
   the adhesive tape forming the layer in contact with the core tube comprises alternating out-facing tape with the adhesive-coated surface facing outside and in-facing tape with the adhesive-coated surface facing inside and,
   the plurality of the single-sided adhesive tapes (T) are provided on the out-facing tape and the in-facing tape in a layered configuration.
(5) A roll type adhesive cleaner set forth in (4) above, wherein the out-facing and the in-facing tapes are laid with laps on their lateral sides.
(6) A method of producing a roll type adhesive cleaner comprising:
   the step of forming a core tube, in which core-forming tapes (21) are wound around a mandrel,
   the step of laying an out-facing tape and an in-facing tape, in which an in-facing tape having an adhesive-coated surface facing inside in contact with the core tube and an out-facing tape having an adhesive-coated surface facing outside are alternately laid obliquely to the axis of the core tube,
   the step of forming a laminate tube, in which a large number of single-sided adhesive tapes are wound around the out-facing tape and the in-facing tape in a layered configuration with their adhesive-coated surface outside and their releasable surface inside such that the lateral sides thereof are oblique to the axis of the core tube to form a laminate tube, and
   the step of cutting, in which the laminate tube is cut at prescribed intervals across the axial direction.
(7) A method of producing a roll type adhesive cleaner set forth in (6) above, wherein the out-facing tape and the in-facing tape are laid with laps on their lateral sides.
(8) A roll type adhesive cleaner comprising a plurality of single-sided adhesive tapes each having an adhesive-coated surface on one side thereof and a releasable surface on the other side thereof which are adhered around a core tube in a layered configuration with the adhesive-coated surface out and with lateral sides oblique to the axis of the core tube, wherein:
   each single-sided adhesive tape forming each layer is laid with spaces between adjacent lateral sides.
(9) A roll type adhesive cleaner comprising a plurality of single-sided adhesive tapes each having an adhesive-coated surface on one side thereof and a releasable surface on the other side thereof which are adhered around a core tube in a layered configuration with the adhesive-coated surface out and with lateral sides oblique to the axis of the core tube, wherein:
   the single-sided adhesive tapes each have on the lateral side area or the lateral edge face thereof a mark indicative of a position for peeling.
(10) A roll type adhesive cleaner set forth in (9) above, wherein the mark is provided along the lateral side over the whole length of the single-sided adhesive tapes.

### Brief Description of the Drawings:

Fig. 1 is a perspective showing a laminate tube of a roll type adhesive cleaner representing a first embodiment of the present invention.
Fig. 2 is a cross-section along line 2-2 in Fig. 1.
Fig. 3 is a schematic perspective of an essential part showing the formation of the roll type adhesive cleaner.
Fig. 4 is a perspective of an essential part of a roll type adhesive cleaner representing a second embodiment of the present invention.
Fig. 5 is a cross-section along line 5-5 in Fig. 4.
Fig. 6 is a schematic perspective of an essential part showing the formation of the roll type adhesive cleaner.
Fig. 7 is a perspective of a laminate tube of a roll type adhesive cleaner representing a fourth embodiment of the present invention.
Fig. 8 is a perspective of a laminate tube of a roll type adhesive cleaner representing a fifth embodiment of the present invention.
Fig. 9 is a perspective of a laminate tube of a roll type adhesive cleaner having a mark formed thereon.
Fig. 10 is a perspective of a laminate tube of a roll type adhesive cleaner having a mark formed thereon (corresponding to Fig. 9).
Fig. 11 is a perspective of a laminate tube of a roll type adhesive cleaner having a mark formed thereon (corresponding to Fig. 9).
Fig. 12 is a perspective of a laminate tube of a roll type adhesive cleaner having a mark formed thereon (corresponding to Fig. 9).
Fig. 13A and Fig. 13B are schematics illustrating a method of preparing the single-sided adhesive tape shown in Fig. 9.

### Best Mode for Carrying out the Invention:

Preferred embodiments for carrying out the present invention will be described hereunder with reference to the drawings.

### <First Embodiment>

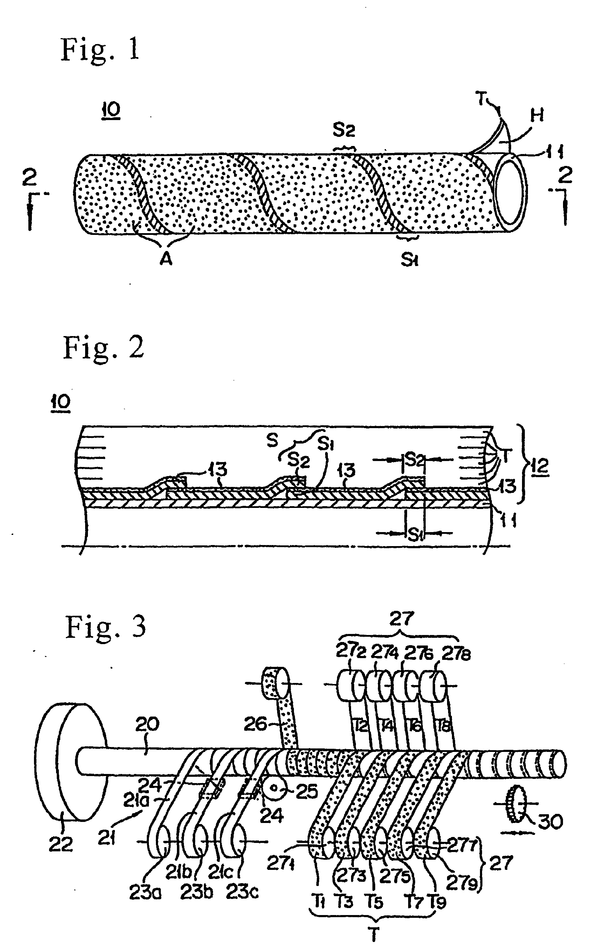

Fig. 1 is a perspective showing a laminate tube of a roll type adhesive cleaner representing the first embodiment of the present invention. Fig. 2 is a cross-section along line 2-2 in Fig. 1.

As shown in Figs. 1 and 2, the roll type adhesive cleaner 10 according to this embodiment is a laminate tube 12 formed of a plurality of wide single-sided adhesive tapes T having an adhesive-coated surface A (indicated by a spotted area) on the outer side and a releasable surface H on the inner side which are adhered to a core tube 11 in a layered configuration.

The single-sided adhesive tape T is wrapped around the core tube 11 such that the adhesive-coated surface A faces outside and the lateral sides s are oblique to the axis of the core tube 11. In the laminate tube 12 according to the present embodiment, each single-sided adhesive tape T making each layer is helically lap-wound such that the adjacent lateral side s₁ and s₂ of the tape T are superposed on each other (shown by slant lines in Fig. 1). The laminate tube 12 is fabricated in a continuous length and cut with a cutter at prescribed intervals across the axial direction to provide roll type adhesive cleaners 10.

Since the roll type adhesive cleaner 10 has laps along lateral sides s of the single-sided adhesive tape T forming each layer as described above, the starting end for peeling (hereinafter "peel starting end") is easy to find to facilitate peeling.

Because the single-sided adhesive tape T and the adhesive 13 are usually formulated to be white so that adhesion of dust may be easily perceptible to the naked eye, the lateral side s of the single-sided adhesive tape T which is superposed on the other lateral side s looks whiter than the other part before dust adheres, revealing itself to be the lateral side s of the tape T, i.e., the peel starting end.

Since the laps, being raised from the other part, are more liable to catch dust, they look blacker than the other part after dust adhesion and therefore make the peel starting end outstanding similarly to the laps before dust adhesion.

Thus, the peel starting end is easy to find with the naked eye irrespective of whether the roll is before or after use. Moreover since the lap of the peel starting end makes a level difference, the single-sided adhesive tape T can easily be peeled by applying a sliding outer force to the adhesive-coated surface A having the adhesive 13 applied.

### <Method of Making>

The method of making the roll type adhesive cleaner 10 will be described in detail with reference to Fig. 3, which is a schematic perspective of an essential part showing the formation of the roll type adhesive cleaner according to the first embodiment.

### <Core Tube Forming Step>

A plurality of core-forming tapes 21ₐ to 21_{c} are wound around a mandrel 20. The mandrel 20 is supported by a rotating fixture 22. The rotating fixture 22 is rotated by transmission of the rotation of a motor (not shown) via a transmission part.

Feed members 23ₐ to 23_{c} (bobbins) are arranged by the side of the mandrel 20, from which the respective core-forming tapes 21ₐ to 21_{c} are fed obliquely toward the downstream. The core-forming tape 21ₐ fed from the first feed member 23ₐ is wound around the outer peripheral surface of the mandrel 20 without being coated with an adhesive. The core-forming tapes 21_{b} and 21_{c} are fed from the second and the third feed members 23_{b} and 23_{c}, and an adhesive 13 is applied to the inner side of these tapes by respective adhesive applicators 24. The core-forming tapes 21_{b} and 21_{c} with the adhesive 13 applied are wound around the core-forming tape 21ₐ that has been wound around the mandrel 20. Thus, the core-forming tapes 21ₐ to 21_{c} are superposed on each other and adhered to each other to form a core tube 11.

The core tube 11 is forwarded along the mandrel 20 in its axial direction by the driving force of a belt (not shown) put on a feed roller 25. In forming a laminate tube 12, the core tube 11 is to receive a rotating force of the mandrel 20 and a winding force of the single-sized adhesive tapes, which are exerted in opposite directions. Therefore, the core tube 11 is required to have sufficient strength not to be broken against these forces. In particular, the core tube is required to have such strength so as not to be deformed nor burst when two-point supported and twisted in opposite directions with an applied torque of 7 Nm or more.

### <Both-sided Tape Winding Step>

A both-sided tape 26 is adhered on the core tube 11 formed on the mandrel 20 in an oblique direction. The both-sided tape 26 is for fixing a laminate tube 12 formed later of adhesive tapes T to the core tube 11.

The means for fixing the laminate tube 12 to the core tube 11 is not limited to the both-sided tape 26. An adhesive may be applied to the core tube 11 or to the single-sided adhesive tape T by means of an adhesive applicator 24. It is possible in some cases to lay a pair of single-sided adhesive tapes T, one facing out and the other in, with laps on their sides.

### <Laminate Tube Forming Step>

An appropriate number of feed members 27 (bobbins), which feed the respective wide single-sided adhesive tapes T obliquely toward the downstream, are arranged by the side of the mandrel 20 on which the core tube 11 having both-sided tape 26 or the like adhered thereto is moving. Single-sided adhesive tapes T₁, T₂, T₃, ... Tₙ fed from the respective feed members 27₁, 27₂, 27₃, ... 27ₙ each have an adhesive-coated surface A outside and a releasable surface H inside so that the adhesive-coated surface A of a lower layer and the releasable surface H of an upper layer face to each other.

The single-sided adhesive tapes T₁ to Tₙ are successively wound with the lateral sides s's of each tape making an oblique angle with the axis of the core tube 11. In the laminate tube 12 according to the present embodiment, in particular, the winding is such that the lateral side s₁ and the adjacent lateral side s₂ of a single-sided adhesive tape T in one layer are superposed on each other to make laps.

By joining the lateral sides s of an adhesive tape T in a lap joint configuration, a large number of feed members 27 (bobbins) are allowed to be lined closely to each other, and the line length of the feed members 27 in the axial direction can be so shortened. As a result, the whole equipment can be made smaller, and a large production space is no more necessary. There is no need to raise the accuracy in feeding the single-sided tapes T as compared with the butt winding method in which the lateral sides s are butt joined, which is advantageous for equipment cost.

### <Cutting Step>

The laminate tube 12 thus formed is cut with a cutter 30 at prescribed intervals across the axial direction. Since the laminate tube 12 is moving, it is preferred that the cutter 30 be also moving while cutting.

### <Second Embodiment>

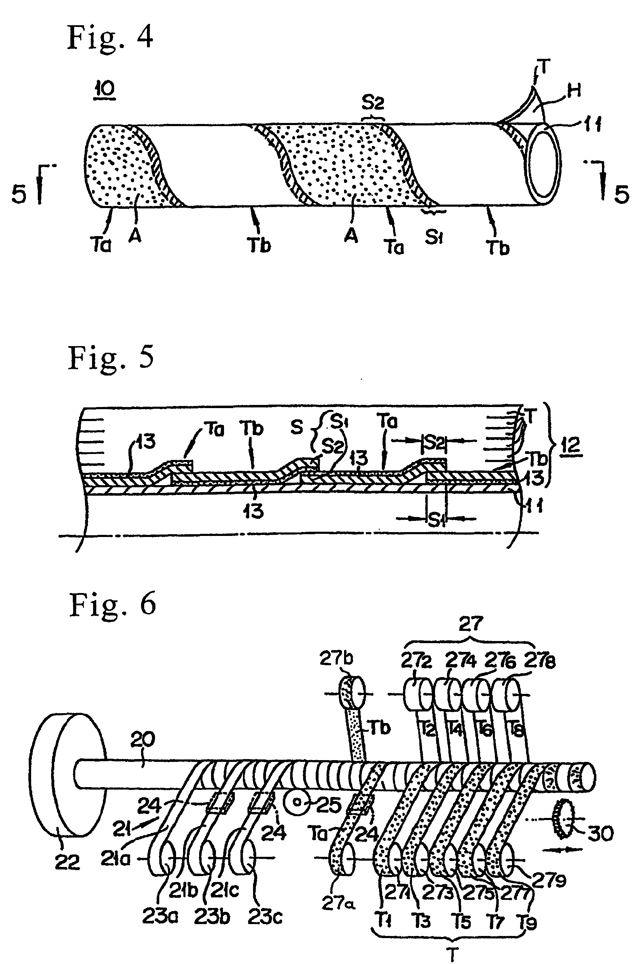

Fig. 4 is a perspective of an essential part of a roll type adhesive cleaner representing a second embodiment of the present invention. Fig. 5 is a cross-section along line 5-5 in Fig. 4. Fig. 6 is a schematic perspective of an essential part showing the formation of the roll type adhesive cleaner. Members common to Figs. 4 through 6 are given the same reference numerals as used in Figs. 1 to 3, and description therefor is omitted here.

As shown in Figs. 4 and 5, in the roll type adhesive cleaner 10 according to this embodiment, the single-sided adhesive tape T₁ as the first layer in contact with the core tube 11 is composed of an out-facing tape Tₐ with its adhesive-coated surface A facing outside and an in-facing tape T_{b} with its adhesive-coated surface A facing inside which are wound around the core tube 11 with laps on their lateral sides s₁ and s₂. A plurality of single-sided adhesive tapes T₂ to Tₙ are then wound with their adhesive-coated surface A facing outside on the out-facing and the in-facing tapes Tₐ and T_{b} to build up layers into a laminate tube 12.

In this way, the laminate tube 12 can be fixed onto the core tube 11 without using a double-sided tape 26 as used in the first embodiment. That all the tapes used except the core-forming tapes 21 are single-sided tapes T facilitates inventory control and tape laying operation.

The second embodiment will be further described in detail. As shown in Fig. 6, core-forming tapes 21ₐ to 21_{c} are wound around the mandrel 20 to form the core tube 11 in the same manner as in the first embodiment. Then, the out-facing tape Tₐ and the in-facing tape T_{b} are fed from feed members 27ₐ and 27_{b}, which are arranged by the side of the mandrel 20, and wound obliquely toward the downstream.

The out-facing tape Tₐ is the first to be wound. In this case, the winding space between adjacent turns of the out-facing tape Tₐ is made narrower than the width of the in-facing tape T_{b}. Then the in-facing tape T_{b} starts being wound. As stated above, since the space between adjacent sides of the out-facing tape Tₐ is narrower than the width of the in-facing tape T_{b}, the in-facing tape T_{b} is laid between the out-facing tapes Tₐ with overlaps. As a result, the in-facing tape T_{b} is fixedly laid on the adhesive side of the out-facing tape Tₐ.

On finishing laying the out-facing tape Tₐ and the in-facing tape T_{b}, single-sided adhesive tapes T₁ to Tₙ are wound successively with their lateral sides overlapping with each other in each layer to form the laminate tube 12.

While in the second embodiment the out-facing tape Tₐ and the in-facing tape T_{b} are wound with laps in their lateral sides s, the out-facing tape Tₐ may be laid on with no laps by applying an adhesive to the reverse of the out-facing tape Tₐ with an adhesive applicator 24.

### <Third Embodiment>

The first and second embodiments represent a winding pattern wherein the lateral sides s of a single-sided adhesive tape T are superposed on each other. Taking only peeling capabilities into consideration, the single-sided adhesive tape T forming each layer may be laid with space (not shown) between adjacent turns. This winding pattern requires an increased space for the feed members 27 as compared with the butt winding pattern but brings about improved releasability between the single-sided adhesive tapes T.

### <Fourth Embodiment>

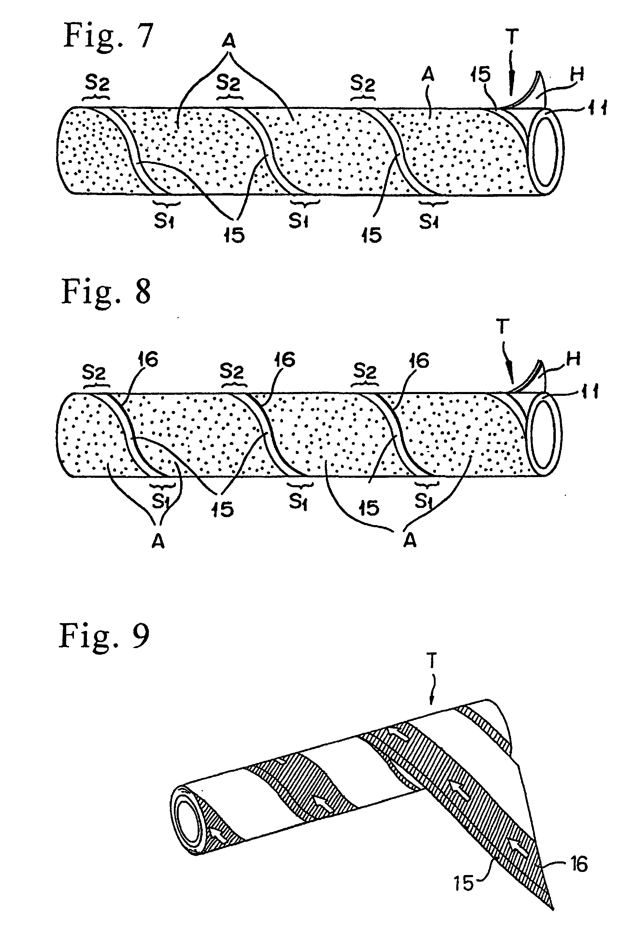

Fig. 7 is a perspective of a laminate tube of a roll type adhesive cleaner representing a fourth embodiment of the present invention. Similarly to the first embodiment, the roll type adhesive cleaner 10 according to this embodiment is made up of a plurality of wide single-sided adhesive tapes T which are helically adhered on the core tube 11 with their adhesive-coated surface A outside and their releasable surface **H** inside in a layered configuration such that the lateral side s₁, and the adjacent lateral side s of a single-sided adhesive tape **T** form a lap joint to make each layer. The single-sided adhesive tape T has a non-coated area **15** on its lateral side s where the adhesive **13** is not applied over the whole length from the peel starting end to the tail where peeling ends (hereinafter "peel finishing end").

With this configuration, when a user picks up a peel starting end of a single-sided adhesive tape T to start peeling, the peeling action exerts little influence on the underlying single-sided adhesive tape so that double peeling may be prevented effectively.

Further, with this configuration, it is the whiter raised part on the white background that is to be found out similarly to the first embodiment. Therefore, it is easy for a user to find the peel starting end with the naked eye. It is easy even for visually handicapped or aged users to distinguish and find the peel starting end clearly.

In greater detail, the single-sided adhesive tape T is wound with laps where the lateral sides s₁ and s₂ meet on their non-coated areas having no adhesive **13** applied so that the peel starting end is easy to distinguish either before or after dust adhesion.

When the peel starting end is to be found out with the naked eye, the peel starting end can easily be distinguished as a white raised part before dust adhesion or as an outstanding white helical stripe after dust adhesion because the adhesive-coated area has caught dust and turned black while the non-coated area 15 remains intact with no dust adhered.

For those visually handicapped and the like, the peel starting end can easily be found out by the feel either before or after dust adhesion. That is, a user can slide his or her fingers along the non-coated area 15 or slide his or her finger tip on the angular edge of either axial end of the adhesive cleaner 10 to easily find out the peel starting end having no adhesive 13. Additionally, the area to be coated with the adhesive is reduced, which is economically advantageous.

### <Fifth Embodiment>

Fig. 8 is a perspective of a laminate tube of a roll type adhesive cleaner representing a fifth embodiment of the present invention. The roll type adhesive cleaner 10 according to this embodiment represents an improvement added to the above-described fourth embodiment so that the peel starting end may be distinguished more clearly and more easily.

The single-sided adhesive tape T in the fifth embodiment has a non-coated area 15 with no adhesive 13 applied along its lateral side s over the whole length from the peel starting end to the peel finishing end in the same manner as in the fourth embodiment and additionally has a mark 16 indicative of the peel position on the lateral side area or the lateral edge face of the single-sided adhesive tape T. The mark 16 may be provided either continuously or discretely over the total length of the tape T.

The "mark" as referred to herein is a means for helping a user recognize at least the aforementioned peel starting end. The mark includes, for example, printed display of figures, signals, letters, etc., stuck stickers, punched holes, and unevenness formed by embossing. The "mark" used in the present embodiment is a color given to the peel starting end whereby the boundary between the peel starting end and the adjoining part can be distinguished.

Where in particular a mark 16 is made on the lateral side area or the lateral edge face of the non-coated area 15, where no adhesive 13 is applied, of the single-sided adhesive tape T, only the peel starting end may be colored, but it is advisable to color the whole length along the lateral side s of the tape T. In the latter case, not only the peel line from the start to finish but the non-coated area 15 with no adhesive 13 applied, i.e., non-adhesive area will be clearly shown, which improves handling capabilities. There is formed an axially helical line, which will produce visual design effects and increase merchandise value.

Where a mark 16 is formed over the total length of the tape T, a user can easily find the peel starting end with the naked eye without sliding his or her fingers along the non-coated area 15 or on the angular edges at both ends of the adhesive cleaner 10.

Specific examples of marks 16 are shown in Figs. 9 through 12. The single-sided adhesive tape T of the adhesive cleaner shown in Fig. 9 has a white background, and one of almost equal vertical halves, inclusive of the lateral side, is colored over the whole length to make a mark 16. Arrows indicating the peel direction of the single-sided adhesive tape T are printed on the colored area forming the mark 16. Letters indicating the peel direction can be displayed in place of or in addition to the arrows. A non-coated area 15 with no adhesive applied is formed on the lateral side area forming the mark 16 in the single-sided adhesive tape T over the whole length of the single-sided adhesive tape T. An adhesive is applied to the area other than the non-coated area 15 in the single-sided adhesive tape T. On helically winding the single-sided adhesive tape T, the colored part forming the mark 16 overlaps on the white background of the single-sided adhesive tape T. The difference between the two colors facilitates finding the peel starting end with the naked eye. Even when the single-sided tape T unexpectedly tears during peeling, the torn end can be found with ease.

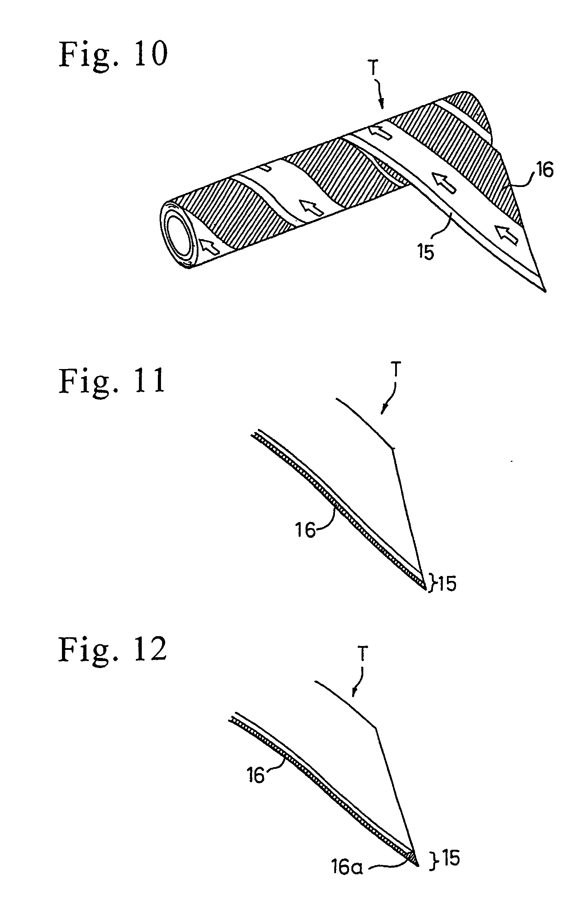

The single-sided adhesive tape T of the adhesive cleaner shown in Fig. 10 also has a white background similarly to the single-sided adhesive tape T shown in Fig. 9. The difference between the single-sided adhesive tape T shown in Fig. 10 and that shown in Fig. 9 is that the colored area forming the mark 16 is in the opposite side and that a non-coated area 15 is provided on the lateral side of the area having no mark 16 in the single-sided adhesive tape T over the whole length of the single-sided adhesive tape T. On helically winding the single-sided adhesive tape T shown in Fig. 10, the white part of the single-sided adhesive tape T overlaps on the colored area forming the mark 16 of the tape T. Similarly to the single-sided adhesive tape shown in Fig. 9, the difference between the two colors facilitates finding the peel starting end with the naked eye.

The single-sided adhesive tape T of the adhesive cleaner shown in Fig. 11 has its side end colored in a small width over the whole length to form a mark 16. Further, a non-coated area 15 having no adhesive applied is formed on the same side end over the whole length of the single-sided adhesive tape T. The non-coated area 15 also has a small width but is wider than the mark 16. In other words, the non-coated area 16 covers the whole mark 16.

The single-sided adhesive tape T of the adhesive cleaner shown in Fig. 12 is almost the same as the single-sided adhesive tape shown in Fig. 11. The difference lies in that the single-sided adhesive tape T shown in Fig. 12 additionally has a relatively large triangular mark 16a at the peel starting end. According to this example, the peel starting end can be found more easily than that of the single-sided adhesive tape shown in Fig. 11.

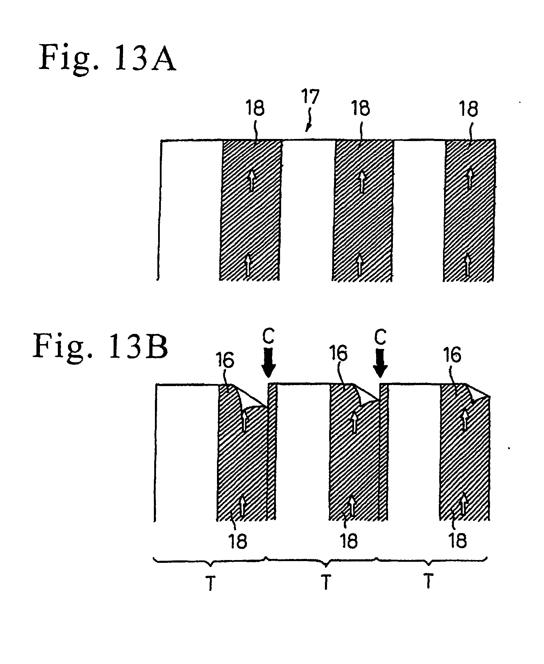

The method of preparing single-sided adhesive tapes having their lateral side area colored will be described by referring to Figs. 13A and 13B. As shown in Fig. 13A, a continuous sheet 17 whose width is a several multiple of the width of a single-sided adhesive tape is fed from the stock roll (not shown), and one surface of the sheet was colored by gravure printing or a like method in broad stripes 18, 18, ... at a given interval between the longitudinal sides. Then an adhesive (not shown) is applied to the colored stripes 18-containing surface of the continuous sheet 17 in a broad stripe pattern. The coating width of the adhesive stripe is slightly smaller than the width of single-sided adhesive tapes to be produced so that a narrow area (not shown) between adjacent adhesive stripes may remain non-coated. The non-coated area is formed on the portion from the right-hand side edge of each colored stripe 18 to several to ten-odd milimeters inward.

The continuous sheet 17 is then cut into strips of prescribed width with a cutting means (not shown), such as a slitter, to obtain single-sided adhesive tapes T each having a mark 16 formed by coloring. The cutting position C is ideally the right-hand side edge of each colored stripe 18. However, the cutting position C may shift from the right-hand side edge to the left or right, which depends on the accuracy of the cutting tool. If the cutting position C shits from the right-hand side edge to the right, the resulting single-sided adhesive tape T will have a narrow non-colored part on the right of its mark 16, which is unfavorable for appearance. Then, with the accuracy of the cutting tool taken into consideration, it is preferred that the cutting position C be some several milimeters wide of the right-hand side edge to the left. The resulting single-sided adhesive tape T will have a narrow colored part on its left-hand end. Such a narrow part gives rise to no particular problem for product appearance because it will be usually hidden by overlapping the single-sided adhesive tape T thereon. While depending on positional accuracy in lap winding, cases can sometimes occur in which the mark 16 unintentionally overlaps with the narrow part, failing to hide the narrow part and making the peel starting end difficult to find. Even when this happens, there still is the advantage that, where the single-sided adhesive tape T unexpectedly tears, for example, while being peeled off, the torn end is easy to find.

The above-described method is for making single-sided adhesive tapes having a mark on the side area thereof. A method of forming a mark on the edge face of a single-sided adhesive tape will then be described. First of all, a continuous single-sided adhesive tape which has an adhesive applied and a non-coated area formed is wound into a cylindrical stock roll. Either the upper face or the lower face of the cylindrical stock roll is colored by a prescribed means to form a colored mark on one edge face of the single-sided adhesive tape.

It is needless to say that the marks 16 used in the examples shown in Figs. 8 through 12 are applicable to the roll type adhesive cleaners according to the first and second embodiments. Likewise, these marks 16 are applicable to the roll type adhesive cleaner of what-we-call "space winding" type according to the third embodiment in which the single-sided adhesive tape T is wound with spaces between the adjacent lateral sides s. The marks 16 are also applicable to the roll type adhesive cleaner of so-called "butt winding" type in which the single-sided adhesive tape T is wound in an edge-to-edge configuration in a range that does not ruin the production efficiency. Application of the mark 16 is particularly effective for role type adhesive cleaners of lap winding type and butt winding type.

The present invention is not limited to the above-described embodiments and examples, and various modifications can be made within the scope of what we claim.

### Industrial Applicability:

According to claims 1 and 3, where the single-sided adhesive tape forming each layer is laid with laps on the lateral sides thereof, the peel starting end is easy to find, and the equipment for the production is reduced in size and is not required to have high accuracy, which is economically advantageous.

According to claim 2, where a lateral side area of a single-sided adhesive tape forming each layer remains uncoated with an adhesive, double peeling does not occur, the peel starting end is easy to find, and an economical advantage is obtained.

According to claims 4, 5, 6, and 7, where an out-facing tape and an in-facing tape are laid with overlaps at their sides, a laminate tube can be fixed on the core tube without using a double-sided tape. Since all the tapes used except the core-forming tapes are single-sided ones, inventory control and tape laying operation are easy.

According to claim 8, since there are spaces between adjacent sides of a single-sided adhesive tape forming each layer, the end has extremely improved peeling capabilities.

According to claim 9, where a single-sided adhesive tape forming each layer has on its lateral side area or edge face a mark indicative of a peeling position, the peel starting end is easy to find. This is particularly effective where the single-sided adhesive tape is in a lap wrap configuration or a butt wrap configuration.

According to claim 10, where the mark is provided on the lateral side of a single-sided adhesive tape over the whole length, the non-adhesive area is made clearer, and the peel starting end is easy to find. Further, the helical line along the axis produces visual design effects and increase merchandise value.

## Claims

1. A roll type adhesive cleaner comprising a plurality of single-sided adhesive tapes (T) each having an adhesive-coated surface (A) on one side thereof and a releasable surface (H) on the other side thereof which are adhered around a core tube (11) in a layered configuration with said adhesive-coated surface (A) out and with lateral sides (s) thereof oblique to the axis of said core tube (11), wherein:
the single-sided adhesive tape (T) forming each layer is laid with laps on the lateral sides (s) thereof.

2. The roll type adhesive cleaner according to claim 1, wherein said single-sided adhesive tapes (T) each have a non-coated area (15) having no adhesive (13) applied on the lateral side thereof.

3. A method of producing a roll type adhesive cleaner comprising:
the step of forming a core tube, in which core-forming tapes (21) are wound around a mandrel (20) to form a core tube (11),
the step of forming a laminate tube, in which a large number of single-sided adhesive tapes (T) each having an adhesive-coated surface (A) on the outer side thereof and a releasable surface (H) on the inner side thereof are wound around said core tube (11) in a layered configuration such that the lateral sides (s) of said single-sided adhesive tapes (T) are oblique to the axis of said core tube (11) to form a laminate tube (12), and
the step of cutting the laminate tube, in which said laminate tube (12) is cut at prescribed intervals across the axis direction, wherein:
the single-sided adhesive tape forming each layer is laid with laps on the lateral sides (s) thereof.

4. A roll type adhesive cleaner comprising a plurality of single-sided adhesive tapes (T) adhered around a core tube (11) in a layered configuration such that the lateral sides (s) of said single-sided adhesive tapes (T) are oblique to the axis of said core tube (11), wherein:
the adhesive tape forming the layer in contact with said core tube (11) comprises alternating out-facing tape (Tₐ) with the adhesive-coated surface (A) facing outside and in-facing tape (T_{b}) with the adhesive-coated surface (A) facing inside and,
said plurality of single-sided adhesive tapes (T) are provided on said out-facing tape and said in-facing tape (Tₐ and T_{b}) in a layered configuration.

5. The roll type adhesive cleaner according to claim 4, wherein the out-facing and the in-facing tapes are laid with laps on their lateral sides.

6. A method of producing a roll type adhesive cleaner comprising:
the step of forming a core tube, in which core-forming tapes (21) are wound around a mandrel (20),
the step of laying an out-facing tape and an in-facing tape, in which an in-facing tape (T_{b}) having an adhesive-coated surface (A) facing inside in contact with said core tube (11) and an out-facing tape (Tₐ) having an adhesive-coated surface (A) facing outside are alternately laid obliquely to the axis of said core tube (11),
the step of forming a laminate tube, in which a large number of single-sided adhesive tapes (T) are wound around said out-facing tape (Tₐ) and said in-facing tape (T_{b}) in a layered configuration with their adhesive-coated surface (A) outside and their releasable surface (H) inside such that the lateral sides thereof are oblique to the axis of said core tube (11) to form a laminate tube (12), and
the step of cutting, in which said laminate tube (12) is cut at prescribed intervals across the axis direction.

7. The method of producing a roll type adhesive cleaner according to claim 6, wherein said out-facing tape (Tₐ) and said in-facing tape (T_{b}) are laid with laps on their lateral sides.

8. A roll type adhesive cleaner comprising a plurality of single-sided adhesive tapes (T) each having an adhesive-coated surface (A) on one side thereof and a releasable surface (H) on the other side thereof which are adhered around a core tube (11) in a layered configuration with said adhesive-coated surface (A) out and with lateral sides (s) oblique to the axis of said core tube (11), wherein:
each single-sided adhesive tape (T) forming each layer is laid with spaces between adjacent lateral sides (s).

9. A roll type adhesive cleaner comprising a plurality of single-sided adhesive tapes (T) each having an adhesive-coated surface (A) on one side thereof and a releasable surface (H) on the other side thereof which are adhered around a core tube (11) in a layered configuration with said adhesive-coated surface (A) out and with lateral sides (s) oblique to the axis of said core tube (11), wherein:
said single-sided adhesive tapes (T) each have on the lateral side area or the lateral edge face thereof a mark (16) indicative of a position for peeling.

10. The roll type adhesive cleaner according to claim 9, wherein said mark is provided along the lateral side (s) over the whole length of said single-sided adhesive tapes (T).
